# EUROPEAN PATENT APPLICATION

(11) **EP 2 378 742 A1**
(43) Date of publication of application: **19.10.2011**
(21) Application number: 09832876.8
(22) Date of filing: 25.09.2009
(51) Int. Cl.: H04L 29/10, H04L 29/08

(54) **METHOD FOR DATA COMMUNICATION AND DEVICE FOR ETHERNET**

(30) Priority: 17.12.2008 CN 200810239787
(71) Applicant: Hangzhou H3C Technologies Co., Ltd., Hangzhou City, Zhejiang Province 310053 (CN)
(72) Inventor: YU, Yang, Zhejiang 310053 (CN)
(74) Representative: Rees, Simon John Lewis
(86) International application number: PCT/CN2009/074226
(87) International publication number: WO 2010/069194

(57) **Abstract**

A method for data communication and a device for Ethernet MAC chip communicates with a plurality of PHY chips by a multi-address bus, wherein, the different ports of PHY for different PHY chips are distinguished by using the different addresses on the address bus of the multi-address bus. The result is that the MAC chip can support a greater number of ports, and connect to more PHY chips, so that the number of users that can access an Ethernet device is increased.

## Description

### Technical field

The present application relates to Ethernet technology and in particular to a method for data communication and a device for Ethernet.

### Background art

Currently, broadband access to home technique mainly includes XDSL technique, Ethernet technique and FTTH technique, which use transmission media of telephone line, network cable and optical fiber to door respectively. After emergence of the new long-distance Ethernet technique, Ethernet technique can also use telephone line to access to home, which greatly reduces obstacle in the practical application of Ethernet. However, as compared with an XDSL device, an Ethernet device has an obvious disadvantage: the number of ports supported is relatively small. Currently, an Ethernet device (or a single board of a rack equipment) usually supports 24 ports, or at most 48 ports, while an XDSL device can support 72 ports.

In practical application, there are many high-rise buildings, for example, there are about 128 households in a 18-storey high-rise building, thus, it is preferred that the number of ports supported by an access device is as great as possible. Therefore, an Ethernet device (e.g. an Ethernet switch) needs to provide more physical ports for further enhancing its core competiveness in broadband access application.

At present, a Medium Independent Interface (MII) is adopted between a physical layer (PHY) chip and a medium access control layer (MAC) chip in an Ethernet device. Ethernet medium interfaces include MII RMII SMII GMII, all of which come from MII. MII means that whether the medium is coaxial cable, optical fiber or electric cable needs not to be considered, because the related work processed by the media are all performed by the PHY or MAC chip. MII supports 10M and 100M operation. A MII interface is consisted of 14 signal lines, which means its support is rather flexible, but a disadvantage is that too many signal lines are used for one MII interface.

RMII is a simplified MII interface, which uses only half of the signal lines used by a MII interface in data transmission and reception, hence it usually requires a 50M bus clock. A RMII is generally used for a multi-port switch. Instead of arranging two clocks for reception and transmission at each port, all data ports in a RMII share a clock for reception and transmission at all ports, thereby saving a great number of port data lines. A port of RMII requires 7 signal lines, which is only a half of the number required by a MII, thus the switch can access twice the number of ports for data. Like MII, RMII supports 10M and 100M bus interface speed.

SMII has even smaller number of signal lines than RMII, and S means serial. Because it only uses one signal line to transmit transmitted data and one signal line to transmit received data, its clock frequency is as high as 125M in order to satisfy the 100M requirement on the clock. Why 125M? Because some control information is transmitted in the data line. A port of SMII only uses 4 signal lines to accomplish transmission of 100M signals. The number of signal lines is approximately half of that used in RMII. SMII is widely supported in the industry. Likewise, data reception and transmission at all ports share one and the same external 125M clock.

From this it can be seen that interfaces between a PHY chip and a MAC chip in an Ethernet are all one to one, that is, each physical layer interface uses an independent MII interface to perform one-to-one communication with a corresponding MAC layer port, the ports are independent from one another and do not share any signal line.

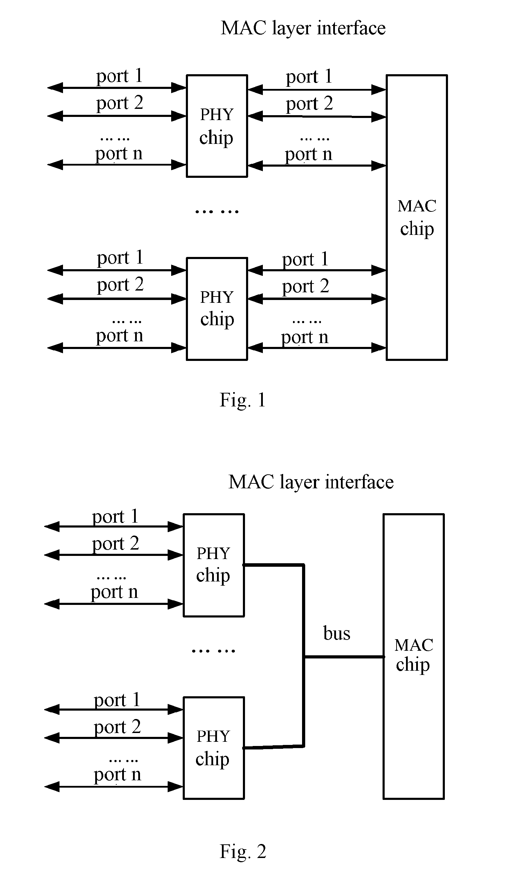

Fig. 1 is an illustration of the connection between a PHY chip and a MAC chip in an Ethernet device. As shown in Fig. 1, in the prior art, the number of ports supported by a MAC chip is relatively great, which is usually 24; while the number of ports supported by a PHY chip is relatively small, which is usually 8. Therefore, one MAC chip can be connected to a plurality of PHY chips, and the interface connection between a PHY chip and a MAC chip are one-to-one.

The method illustrated in Fig. 1 greatly simplifies the design of PHY chips in an Ethernet and thus reduces the cost. Since the ports between MAC and PHY are one-to-one, and the input rate is the same as the output rate, only a little buffer storage is required in the PHY chip, and since the number of ports supported by a PHY chip is small, the required number of pins is relatively small, whereby the design of a PHY chip can be greatly simplified and the cost thereof is reduced significantly. The defect of the method is that a MAC layer chip cannot support a great number of ports.

In Intranet application of Ethernet, speed, which is usually 100Mbps, is the key element, but in the application of broadband access to door, speed is not the key element, because the access bandwidth of each household is 2Mbps or 4Mbps, which may be developed to 33Mbps in the future. In broadband application, interface density is a key element.

Since the number of ports supported by a MAC layer chip is relatively great (e.g. 24) in the existing technology, while the number of ports supported by a PHY chip is relatively small (e.g. 8), and each port needs an independent data interface, the number of pins that a MAC layer chip needs to support is rather great, and it is difficult to support a large number such as 64 or 72. In this case, even using an SMII interface would require 4*64=256 pins. The required number of pins being too great is a major reason why a MAC chip of an Ethernet switch cannot achieve using a signal chip to support a great number of ports at an optimal performance price ratio.

### Summary of the invention

The present invention provides a method for data communication that enables a single MAC chip in an Ethernet device to support a greater number of ports, whereby the competitiveness of the Ethernet device in broadband access application is enhanced.

The present invention further provides an Ethernet device, wherein a single MAC chip in the Ethernet device can support a greater number of ports, whereby the competitiveness of the Ethernet device in broadband access application is enhanced.

In order to achieve the above purpose, the technical solution of the present invention is realized as follows:

The present invention discloses a method for data communication, wherein a medium access control layer MAC chip and more than one physical layer PHY chip use a multi-address bus interface, the method comprises: attaching bus interfaces of the more than one PHY chips to the bus interface of the MAC chip through a multi-address bus uniformly to realize communication between the MAC chip and the more than one PHY chips, wherein different PHY ports on different PHY chips are distinguished by using different addresses on the address bus.

The present invention further discloses an Ethernet device, comprising: a MAC chip and more than one PHY chips connected to the MAC chip through a bus; wherein the different PHY ports on different PHY chips are distinguished by using different addresses on the address bus.

From the aforementioned technical solutions it can be seen that the MAC chip in the present invention communicates with a plurality of PHY chips through a bus, wherein the technical solution of using the different addresses on the address bus to distinguish the different PHY ports on different PHY chips enable the MAC chip to support a greater number of ports and to be connected to more PHY chips in the case of having a given number of pins (i.e. equal to the number of signal lines in the bus), such that the number of users that an Ethernet device can access is increased and thus the competitiveness of the Ethernet device in broadband access application is enhanced.

### Description of the drawings

Fig. 1 is an illustration of the connection between a PHY chip and a MAC chip in an Ethernet device in the prior art.
Fig. 2 is an illustration of communication between a PHY chip and a MAC chip in an Ethernet device in an embodiment of the present invention.
Fig. 3 is a block diagram of a constitution structure of an Ethernet device in an embodiment of the present invention.

### Modes of carrying out the present invention

The general concept of the present invention is to change the current one-to-one interface design between a PHY chip and a MAC chip in an Ethernet device into a multi-address bus interface design and to attach bus interfaces of more than one PHY chips to a bus interface of a MAC chip through a multi-address bus uniformly so as to realize communication between the MAC chip and the more than one PHY chips, whereby a single MAC chip of the Ethernet device (such as an Ethernet switch) can support a greater number of ports.

The present invention is further explained in detail in order to make the purpose, technical solution and advantages of the present invention clearer.

Fig. 2 is an illustration of communication between a PHY chip and a MAC chip in an Ethernet device in an embodiment of the present invention. Now refer to Fig. 2, the technical solution of the present invention comprises the following key techniques:

### (1) a multi-address bus interface is used between a PHY chip and a MAC chip and different PHY ports on different PHY chips are distinguished by using the address bus

The multi-address bus herein can be a Utopia level 2 bus or a POS-PHY bus, etc.

In an embodiment of the present invention, a MAC chip is connected to a plurality of PHY chips through a Utopia level 2 bus.

Utopia level 2 interface protocol specifies that a group of chip-to-chip, packet-based channelized interface bus is a 16-bit data bus, a 50MHz interface and a plurality of links that support an accumulated bandwidth of less than 800Mb/s; the interface supports a 5-bit address bus and can support 32 port addresses, or it can be expanded to support 144 port addresses through multiplexing a data bus into an address bus.

The Utopia level 2 data ports can be divided into a data receiving port and a data transmitting port, each of the two ports has a 5-bit address line (RxAddr and TxAddr) and a 16-bit data line (RxData and TxData). The receiving port has a receive-data-enable signal (RxEnb), a receive-start-of-cell signal (RxSoc) and a receive-clock signal (RxCLK). The transmitting port has a transmit-data-enable signal (TxEnb) a transmit-start-of-cell signal (TxSoc) and a transmit-clock signal (TxCLK), plus other control pins, adding up to 72 pins.

In Utopia level 2 bus, the data line has 16 bits and the address line has 5 bits, the bus has two directions: receiving and transmitting. Therefore, in an embodiment of the present invention, the address bus and data bus in the receiving direction of each PHY chip are connected to the address bus and data bus in the transmitting direction of the MAC chip. Likewise, the address bus and data bus in the transmitting direction of each PHY chip are connected to the address bus and data bus in the receiving direction of the MAC chip. The address bus determines which PHY port on which PHY chip performs the operation of receiving and transmitting data. Operation of PHY ports of all PHY chips are performed in the manner of time-division occupation of the data bus.

For example, when a MAC chip transmits data to a PHY chip, the MAC chip writes in the address of the destination PHY port on the address bus, writes in the data to be transmitted to the destination PHY port on the data bus; each PHY chip determines whether the address on the address bus is the address of the PHY port of its own, if so, receiving the data on the data bus at the PHY port corresponding to the address on the address bus; if not, refusing to receive the data.

When a PHY chip transmits data to a MAC chip, each PHY port of each of the PHY chips occupies the bus in a time-division manner, and writes in the address of the source port (i.e. the address of the PHY port that transmits data) on the address bus when occupying the bus, and writes in the data to be transmitted to the MAC chip on the data bus. The PHY ports occupy the bus in a time-division manner, specifically: each of the PHY ports sends a request when having data to transmit, the MAC chip arbitrates which PHY port can occupy the bus and returns a permit message to a corresponding PHY chip to permit a certain PHY port to occupy the bus.

A specific example is given as follows: the MAC chip and PHY chip both use a bus interface design, the MAC chip and PHY chip both include a bus interface module, and a multi-address bus used for communication has a 16-bit data line and a 5-bit address line. Since the 5-bit address line can address 32 addresses, taking a PHY chip having 8 ports as an example, a MAC chip can connect 32/8=4 PHY chips simultaneously, which are numbered as 1, 2, 3 and 4 respectively. The addresses of the 8 ports of chip 1 are 0-7 respectively, and the addresses of the 8 ports of chip 2 are 8-15 respectively, the addresses of the 8 ports of chip 3 are 16-23 respectively and the addresses of the 8 ports of chip 4 are 24-31 respectively.

When the MAC chip is to transmit data to a PHY port, for example, when the MAC chip needs to transmit data to the second port of chip 2, the bus interface module on the MAC chip writes in 9 on the address bus (the address of the second port of chip 1), then writes in the data to be transmitted to the port whose address is 9 on the data bus; the bus interface module of each PHY chip determines whether or not the address on the address bus is the address of its own PHY port, at this time, only the bus interface module of chip 2 determines that the address on the bus is the address of the second port of PHY chip 2 to which it belongs and makes the second port of the chip 2 receive the data on the data bus while bus interface modules of other PHY chips all determines that the address on the bus is not the addresses of the ports of the PHY chips to which they belong and thus refuses to receive the data on the data bus.

When a bus interface module of a PHY chip has data to transmit at a port of its own PHY chip, it sends a request carrying the address of the port to the bus interface module of the MAC chip. The bus interface module of the MAC chip arbitrates based on a predetermined strategy (such as a time-division manner, etc.) to determine which PHY port can occupy the bus currently, and returns a permit message which carries the PHY port address and indicates permission to occupy the bus to the bus interface module of the corresponding PHY chip. After receiving the permit message, the bus interface module of the PHY chip makes the permitted PHY port to transmit data via the bus, specifically: writing in the address of the PHY port that transmits data on the address bus, and writing in the data to be transmitted by the PHY port on the data bus.

### (2) Adding a buffer in a PHY chip for storing data that is not transmitted to a MAC chip in time due to rate matching and occupation of the bus

In the prior art, interfaces of a PHY chip and interfaces of a MAC chip are one-to-one, and the rates thereof are all the same standard rate, thus data received by a PHY chip is quickly transmitted to a MAC chip. In the present invention, however, interfaces of a PHY chip and interfaces of a MAC chip are not in a one-to-one relationship, thus there exists contending for and occupation of the bus. Thus, it cannot be guaranteed that data received by a PHY chip is quickly transmitted to a MAC chip, and the data may need to be stored temporarily. Therefore, in an embodiment of the present invention, a buffer is added in a PHY chip for storing data that is not transmitted to a MAC chip in time due to rate matching and occupation of the bus.

### (3) Amending the current clock method of PHY chips and MAC chips in order to provide a bus interface clock by a MAC chip uniformly

In the prior art, a clock is provided by a PHY chip at an Ethernet MAC layer interface, and clocks at individual ports can be different from one another. In the bus interface of the present invention, however, a uniform clock must be used on the bus instead of using a respective clock on each of the ports. Therefore, in the present invention a uniform bus interface clock is provided by the MAC chip. A clock matching module is added to each of the PHY chips to synchronize physical layer clocks of the respective ports with the bus interface clock.

In this way, bus interfaces of a plurality of PHY chips can be attached to a bus interface of a MAC chip such that a MAC chip can connect a plurality of physical layer chips through a multi-address bus, hence an Ethernet switch can support the same number of physical ports as an XDSL device can do, or even supports a greater number of physical ports, whereby the core competitiveness of an Ethernet switch in broadband access application can be enhanced.

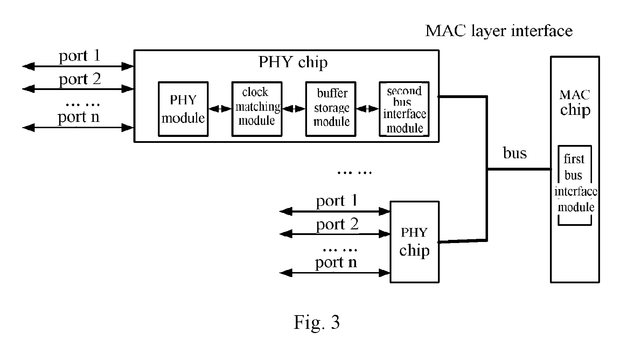

Fig. 3 is a block diagram of the constitution structure of an Ethernet device in an embodiment of the present invention. As shown in Fig. 3, the device comprises: a MAC chip and more than one PHY chips connected to the MAC chip through a multi-address bus; wherein the different PHY ports on different PHY chips are distinguished by using the different addresses on the address bus.

In Fig. 3, the multi-address bus that connects the MAC chip and the PHY chips can be a Utopia level 2 bus or a POS-PHY bus, etc. For example, when using a Utopia level 2 bus, the Utopia level 2 bus supports a 5-bit address bus and can address 32 ports. Supposing each PHY chip has 8 ports, then a MAC chip can connects 4 PHY chips. It is mentioned in the preceding text that the Utopia level 2 bus can be extended to support 144 port addresses by multiplexing a data bus into an address bus, then a MAC chip can connect 18 PHY chips that each have 8 ports at this time. This greatly increases the number of ports that can be supported by a single MAC chip.

In Fig. 3, the MAC chip and the PHY chips all use a multi-address bus interface design. The MAC chip comprises a first bus interface module, each of the PHY chips comprises: a second bus interface module, wherein:
the first bus interface module is used for writing in the address of the destination PHY port on the address bus of the multi-address bus and writing in data to be transmitted to the destination PHY port on the data bus of the multi-address bus;
the second bus interface module is used for determining whether the address on the address bus is the address of a PHY port of the PHY chip to which it belongs when the MAC chip transmits data; if so, making the PHY port corresponding to the address on the address bus receive the data on the data bus.

The second bus interface module further makes each of the PHY ports on the PHY chip to which it belongs occupy the multi-address bus in a time-division manner to transmit data to the MAC chip, specifically, the second bus interface module sends a request to the MAC chip when having data to transmit at a PHY port of the PHY chip to which it belongs, and makes the PHY port transmit the data to the MAC chip through the bus after receiving a permit message from the MAC chip. The permit message transmitted by the MAC chip is transmitted by the first bus interface module in the MAC chip.

For example, in Fig. 3, when the second bus interface module of the PHY chip has data to transmit at a certain port of the PHY chip to which it belongs, it sends a request that carries the address of the port to the first bus interface module of the MAC chip; the first bus interface module arbitrates in a time-division manner or any other predetermined manner to determine which PHY port can occupy the multi-address bus currently and returns a permit message to the second bus interface module of the corresponding PHY chip, the permit message carries the address of the PHY port and indicates permission to occupy the multi-address bus; after receiving the permit message, the second bus interface module of the PHY chip enables the permitted PHY port to transmit data through the multi-address bus, specifically, writing in the address of the PHY port that transmits the data on the address bus of the multi-address bus and writing in the data to be transmitted by the PHY port on the data bus of the multi-address bus.

In Fig.3, each PHY chip further comprises: a buffer for storing data that is not transmitted to a MAC chip in time due to rate matching and occupation of the bus. This is because: in the prior art, interfaces of a PHY chip and interfaces of a MAC chip are one-to-one, and the rates thereof are all the same standard rate, thus data received by a PHY chip is quickly transmitted to a MAC chip. In the present invention, however, interfaces of a PHY chip and interfaces of a MAC chip are not in a one-to-one relationship, thus there exists competition for occupation of the bus. Thus, it cannot be guaranteed that data received by a PHY chip is quickly transmitted to a MAC chip, and the data may need to be stored temporarily.

In Fig. 3, the MAC chip is further used for providing a uniform bus interface clock; each PHY chip further comprises a clock matching module for converting physical layer clocks of PHY ports of the PHY chip to which it belongs into the bus interface clock. This is because: in the prior art, a clock is provided by a PHY chip at an Ethernet MAC layer interface, and clocks at individual ports can be different from one another. In the bus interface of the present invention, however, a uniform clock must be used on the bus instead of using a respective clock on each of the ports. Therefore, clock on the bus in the present invention is provided by a MAC chip uniformly. A clock matching module is added in the PHY chip to convert physical layer clocks of the respective ports into the bus interface clock.

It should be explained that the internal structure of only one PHY chip is shown in Fig. 3 for simplicity, internal structures of other PHY chips are not shown.

In summary, such a MAC chip in the present invention uses a bus to communicate with a plurality of PHY chips, wherein the technical solution of using different addresses on the address bus to distinguish different PHY ports on different PHY chips makes it possible for a MAC chip to support a greater number of ports and to be connected to more PHY chips in the case of having a given number of pins, whereby the number of users that can be accessed by an Ethernet device is increased and the competitiveness of a Ethernet device in broadband access application is enhanced.

What are described above are only preferred embodiments of the present invention, and are not used for limiting the scope of protection of the present invention. It should be understood that any modification, equivalent substitution or improvement within the spirit and principle of the present invention shall be included in the scope of protection of the present invention.

## Claims

1. A method for data communication, **characterized in that**: a medium access control layer MAC chip and more than one physical layer PHY chips use a multi-address bus interface, the method comprises:
attaching bus interfaces of the more than one PHY chips to a bus interface of the MAC chip through a multi-address bus uniformly to realize communication between the MAC chip and the more than one PHY chips, wherein different PHY ports on different PHY chips are distinguished by using different addresses on the address bus of the multi-address bus.

2. The method according to claim 1, **characterized in that**:
communication between the MAC chip and the more than one PHY chips comprises:
the MAC chip writing in the address of a destination PHY port on the address bus of the multi-address bus and writing in data to be transmitted to the destination PHY port on the data bus of the multi-address bus; each of the PHY chips determining whether or not the address on the address bus is the address of its own PHY port; if so, receiving the data on the data bus at the PHY port corresponding to the address on the address bus;
each port of each PHY chip occupying the multi-address bus in a time-division manner to transmit data to the MAC chip.

3. The method according to claim 2, **characterized in that**: the method further comprises:
buffering data that is not transmitted to the MAC chip in time due to rate matching and occupation of the bus in each of the PHY chips.

4. The method according to claim 1, **characterized in that**: the method further comprises:
the MAC chip providing a uniform bus interface clock;
each of the PHY chips being further used to convert a physical layer clock of its own PHY port into the bus interface clock.

5. The method according to claim 1, 2, 3 or 4, **characterized in that**: the multi-address bus is a Utopia level 2 bus or a POS-PHY bus.

6. An Ethernet device, **characterized in that**: the device comprises: a MAC chip and more than one PHY chips connected to the MAC chip through a multi-address bus; wherein different PHY ports on different PHY chips are distinguished by using different addresses on the address bus of the multi-address bus.

7. The device according to claim 6, **characterized in that**: the MAC chip comprises: a first bus interface module, each of the PHY chips comprises: a second bus interface module; wherein the first bus interface module is used for writing in the address of the destination PHY port on the address bus of the multi-address bus and writing in data to be transmitted to the destination PHY port on the data bus of the multi-address bus; the second bus interface module is used for determining whether or not the address on the address bus is the address of a PHY port of the PHY chip to which it belongs when the MAC chip transmits data; if so, making the PHY port corresponding to the address on the address bus receive the data on the data bus;
the second bus interface module further makes each PHY port on the PHY chip to which it belongs occupy the multi-address bus in a time-division manner to transmit data to the MAC chip.

8. The device according to claim 7, **characterized in that**: each of the PHY chips further comprises: a buffer for storing data that is not transmitted to the MAC chip in time due to rate matching and occupation of the bus.

9. The device according to claim 6, **characterized in that**:
the MAC chip is further used for providing a uniform bus interface clock;
each of the PHY chips further comprises: a clock matching module for converting a physical layer clock at a PHY port of the PHY chip to which it belongs into the bus interface clock.

10. The device according to claim 6, 7, 8 or 9, **characterized in that**: the multi-address bus is a Utopia level 2 bus or a POS-PHY bus.
